# EUROPEAN PATENT SPECIFICATION

(11) **EP 1 483 125 B1**
(45) Date of publication and mention of the grant of the patent: **06.07.2005**
(21) Application number: 03711494.9
(22) Date of filing: 11.03.2003
(51) Int. Cl.: B60H 1/00

(54) **HEADLINER VENTILATION SYSTEM WITH HEADLINER AIR DUCT INTEGRATED WITH PILLAR AIR DUCT**
IM FAHRZEUGDACH INTEGRIERTES LÜFTUNGSSYSTEM MIT EINEM EINSTÜCKIG AUSGEBILDETEN, IM DACH UND IN EINER SÄULE VERLAUFENDEN LUFTKANAL
SYSTEME DE VENTILATION DE GARNITURE DE PAVILLON AVEC CONDUITS D'AIR DE GARNITURE DE PAVILLON ET DE MONTANT INTEGRES

(30) Priority: 11.03.2002 US 363048 P
(43) Date of publication of application: 08.12.2004
(73) Proprietor: Intier Automotive Inc., Newmarket, Ontario L3Y 4X7 (CA)
(72) Inventor: LIPKE, Clarence, P., Fenton, MI 48430 (US)
(74) Representative: Pfiz, Thomas, Dr.
(86) International application number: PCT/US2003/007188
(87) International publication number: WO 2003/078186

(56) References cited:
- DE-A- 3 510 336
- GB-A- 2 302 404
- GB-A- 2 332 887
- US-B1- 6 267 407
- US-B1- 6 315 354

## Description

### BACKGROUND OF THE INVENTION

### Field of the Invention

This invention is generally related to a headliner ventilation system for a vehicle, and in particular to a headliner ventilation system that includes a headliner air duct with an integrated pillar air duct that can collapse into a compact state for transport and then unfolded into an extended state for installation into a vehicle.

### Description of the Related Art

Most of today's vehicles have multiple air vents located within them for circulating heated or conditioned air throughout the interior of the vehicle, e.g. as disclosed in US 6 315 354 B. A typical headliner ventilation system 10 is shown in Figure 1. Often some of these vents are located in a headliner 11 of the vehicle to allow for more efficient circulation. This location requires a headliner air duct 12 within the headliner 11 along with a second duct 14 for transporting air from an air source 16, such as a heater and/or air conditioner to the headliner air duct 12. This second duct 14 usually is installed within a pillar area of the vehicle. During the assembly process, this pillar air duct 14 must be aligned with and connected to the headliner air duct 12 in such a manner as to assure an adequate seal therebetween. Unfortunately, this adequate seal may not be provided due to human error during the assembly process, resulting in loss of airflow delivery in the ventilation system 10.

Dashboard air ducts comprising flexible hinge portions are also generally known, e.g. from GB 2 302 404 A.

### SUMMARY OF THE INVENTION

The invention is directed to a headliner ventilation system, or more specifically, a headliner air duct that has an integrated pillar air duct according to claim 1. The pillar air duct allows delivery of air from an air source, such as a heater and/or air conditioning system of the vehicle, to the headliner air duct. One feature of the invention is that the integrated pillar air duct can be selectively positioned into a compact state allowing for easy transport and storage of the headliner. Another feature of the invention is that during installation the integrated pillar air duct can be selectively positioned from the compact state into an extended state for easy assembly of the headliner ventilation system.

### BRIEF DESCRIPTION OF THE DRAWINGS

In the drawings:

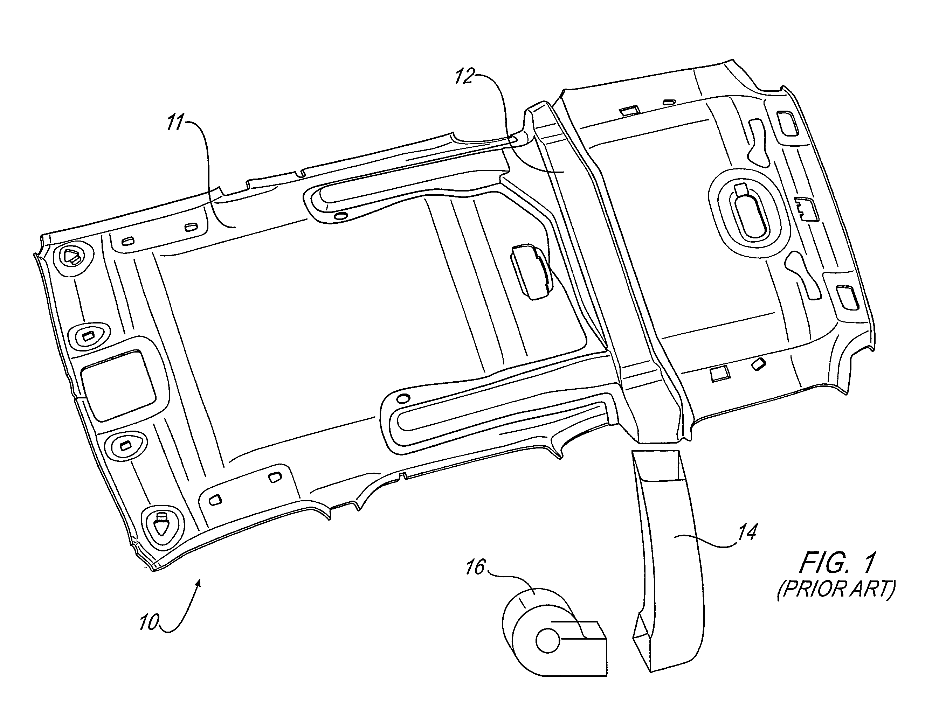

Figure 1 is a simplified depiction of a typical prior art headliner configuration requiring a separate pillar duct;
Figure 2 is a simplified depiction of a headliner with an integrated pillar duct in accordance with the present invention; and
Figure 3 is a simplified depiction of a headliner with an integrated pillar duct that is folded up into a shipping position for easy transport in accordance with the present invention.

### DESCRIPTION OF THE PREFERRED EMBODIMENT

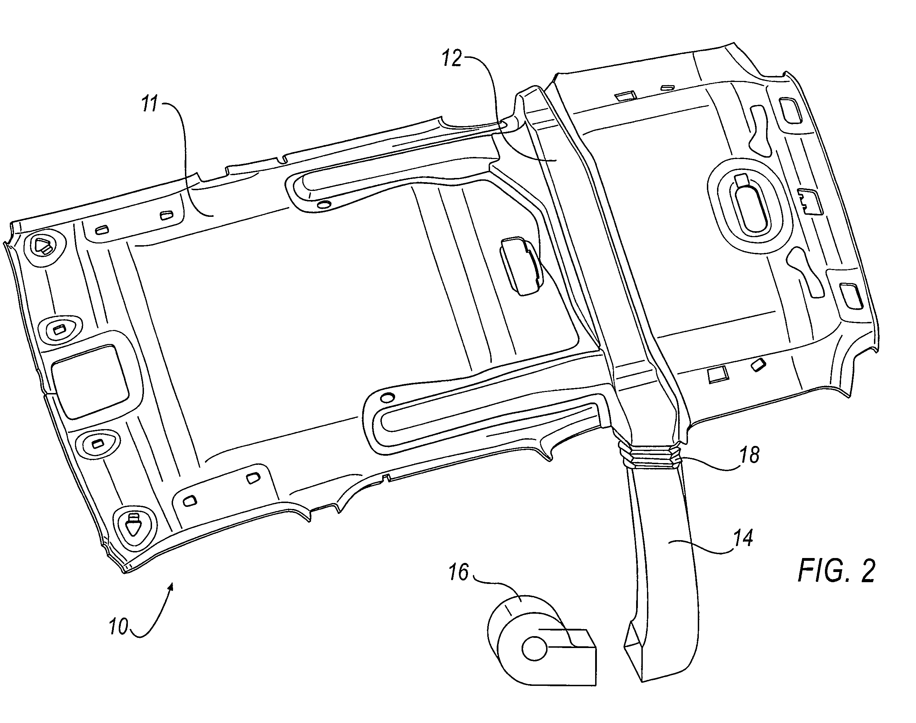

Referring to Figure 2, a headliner ventilation system, shown generally at 10 in accordance with the claimed invention, includes a headliner 11, and a headliner air duct 12 that is integrally formed with a pillar air duct 14 by a flexible hinge portion 18 to provide fluid communication therebetween. During assembly of a vehicle interior (not shown), the headliner ventilation system 10 can be easily mounted and connected to an air source 16 without concern for proper alignment and sealing connection of the pillar air duct 14 with the headliner air duct 12, unlike conventional headliner configurations that require accurate manual alignment of the two separate air ducts to form a proper seal therebetween.

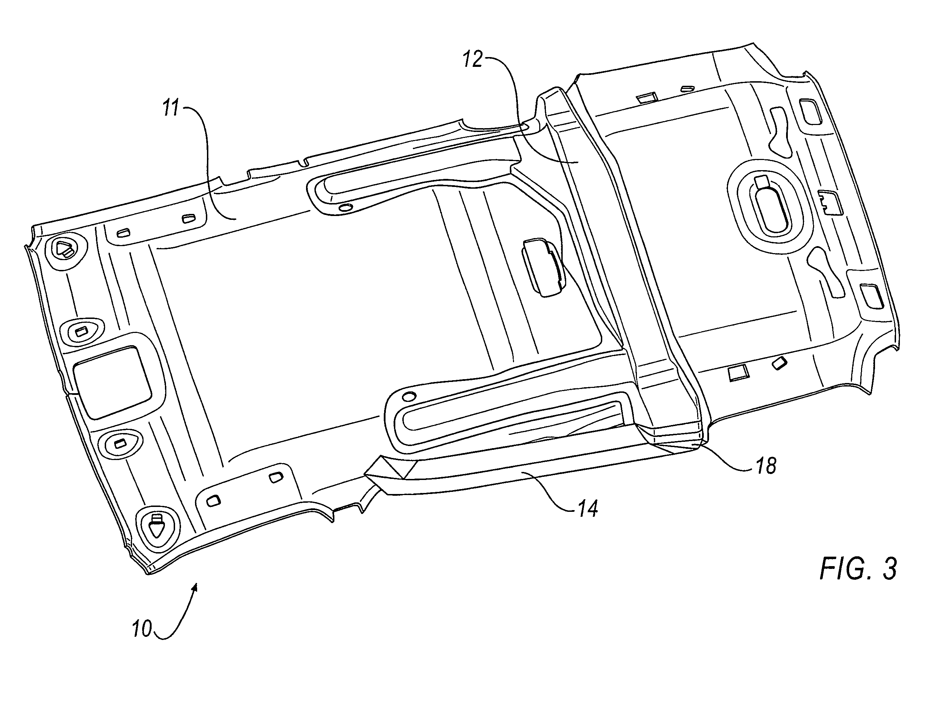

As illustrated in Figure 3, prior to being incorporated into the vehicle, the flexible hinge portion 18 also allows the headliner ventilation system 10 to be easily stored or transported by folding the pillar air duct 14 into a compact, shipping position or state. Thus, the flexible hinge portion 18 allows the headliner ventilation system 10 to be selectively positioned between the compact state for storage or transport and an extended state for installation into the vehicle.

The flexible hinge portion 18 may be any desirable configuration to allow the headliner ventilation system 10 to be selectively positioned between the compact state and the extended state. Preferably, the flexible hinge portion 18 is optimally designed to allow airflow to travel through the flexible hinge portion 18 with as little noise, vibration and harshness (NVH) as possible. For example, the flexible hinge portion 18 may include a plurality of accordion-like corrugations for reducing NVH.

Unlike conventional headliner ventilation configurations that utilize two duct pieces and require a proper seal to be made between them, the present invention offers several advantages. By integrating the pillar air duct 14 with the headliner air duct 12, fewer components are required, leading to decreased inventory of required parts. Additionally, reduced assembly costs are appreciated due to decreased labor requirements. Lastly, because the two ducts 12, 14 are integrated, there is no concern for air leakage due to an improper seal between the two ducts, unlike conventional headliner ventilation systems in which human error in connecting the two ducts dunng the assembly process may result in an improper alignment and sealing action between the two ducts.

It will be appreciated that the illustrated embodiment of the invention as described above can be applied to other ventilation systems within a vehicle, such as a ventilation system for a vehicle dashboard, or the like.

While the invention has been specifically described in connection with certain specific embodiments thereof, it is to be understood that this is by way of illustration and not of limitation.

## Claims

1. A headliner ventilation system (10) for a vehicle, comprising:
a headliner air duct (12), and
a pillar air duct (14) integrally formed and in fluid communication with said headliner air duct (12) by use of a flexible hinge portion (18) for selectively positioning said headliner ventilation system (10) between a compact state and an extended state.

2. A headliner ventilation system (10) as claimed in claim 1, wherein said flexible hinge portion (18) includes a plurality of accordion-like corrugations.

## Patentansprüche

1. Dachhimmel-Lüftungssystem (10) für ein Fahrzeug, umfassend:
einen Dachhimmel-Luftkanal (12), und
einen Säulen-Luftkanal (14), der unter Verwendung eines flexiblen Gelenkteils (18) als Einheit mit dem Dachhimmel-Luftkanal (12) ausgebildet ist und in Fluidverbindung mit diesem steht, um das Dachhimmel-Lüftungssystem (10) wahlweise zwischen einem kompakten Zustand und einem ausgeklappten Zustand zu positionieren.

2. Dachhimmel-Lüftungssystem (10) nach Anspruch 1, bei dem der flexible Gelenkteil (18) eine Mehrzahl von akkordeonartigen Balgen einschließt.

## Revendications

1. Un système de ventilation de plafonnier (10) pour un véhicule, comprenant :
un conduit d'air de plafonnier (12), et
un conduit d'air de pilier ou en forme de pilier (14) formé intégralement et en communication fluidique avec ledit conduit d'air de plafonnier (12) en utilisant une portion de charnière flexible (18) pour déplacer ou disposer sélectivement ledit système de ventilation de plafonnier (10) entre un état compact et un état déployé.

2. Un système de ventilation de plafonnier (10) selon la revendication 1, dans lequel ladite portion de charnière flexible (18) comprend plusieurs corrugations ou ondulations en forme d'accordéon.
